# EUROPEAN PATENT SPECIFICATION

(11) **EP 2 399 777 B1**
(45) Date of publication and mention of the grant of the patent: **14.08.2024**
(21) Application number: 11170955.6
(22) Date of filing: 22.06.2011
(51) Int. Cl.: B60Q 1/14

(54) **Control device, vehicle headlamp, and vehicle headlamp system**
Steuervorrichtung, Fahrzeugscheinwerfer und Fahrzeugscheinwerfersystem
Dispositif de commande, phare de véhicule et système de phare de véhicule

(30) Priority: 24.06.2010 JP 2010144025
(43) Date of publication of application: 28.12.2011
(73) Proprietor: Koito Manufacturing Co., Ltd., Tokyo 108-8711 (JP)
(72) Inventor: Mochizuki, Kiyotaka, Shizuoka (JP); Hori, Takashi, Shizuoka (JP); Komatsu, Motohiro, Shizuoka (JP); Tatara, Naoki, Shizuoka (JP)
(74) Representative: Hoffmann Eitle

(56) References cited:
- DE-A1- 10 057 367
- DE-A1- 102008 060 949
- JP-A- 2009 007 001
- JP-A- H07 125 570
- US-A1- 2004 218 401
- US-A1- 2005 073 853
- US-A1- 2009 254 247
- US-A1- 2009 315 479

## Description

The present invention relates to a control device, a vehicle headlamp, and a vehicle headlamp system configured to change a light distribution pattern in accordance with a condition of a vehicle or an environment surrounding the vehicle.

JP 2009-179113 A discloses a vehicle headlamp system configured to partially irradiate a high beam region to improve driver's field of vision. To further improve driver's field of vision, JP 2009-227088 A and JP 2010-000957 A disclose adaptive driving beam (ADB) systems configured to detect a forward vehicle using a camera and to control partial high beam patterns so that the high beam region is irradiated except for a region where the forward vehicle is detected.

Moreover, JP H07-125570 A, US 2004/218 401 A1, US 2009/254247 A1 and DE 10 2008 060949 A1 disclose similar vehicle headlamp systems. US 2004/218401 A1 discloses for example a digital lightning apparatus for a vehicle, which employs a reflection digital light deflector, includes a storage unit that stores digital data of a plurality of light distribution patterns and a controller. The controller selects digital data corresponding to a predetermined light distribution pattern from among the digital data stored in the storage unit and controls the reflection digital light deflector, and illuminates a road surface and the like with the predetermined light distribution pattern.

US 2005/0073853 A1 discloses a control device according to the preamble of claim 1.

In recognizing a forward vehicle at night, cameras are advantageous than radars such as laser radars and milliwave radars in that more distant vehicles can be detected by recognizing light spots in an image taken by the camera.

However, when driving in bad weather or in an area, such as an urban area, a forward vehicle may not be accurately detected from an image taken by the camera due to disturbance light. Therefore, when a light irradiation system like the ADB system is operated under such conditions, it may cause a glare for other drivers in front of the vehicle.

The present invention is defined by the control device according to the appended independent claim 1. The respective dependent claims describe optional features and preferred embodiments.

The present invention has been made with a view to preventing an unsuitable light distribution pattern from being selected in a vehicle headlamp system configured to change a light distribution pattern on the basis of a position of a forward vehicle detected from image data.

According to an aspect of the present disclosure, a control device, a vehicle headlamp, and a vehicle headlamp system are provided. The control device, the vehicle headlamp, and vehicle headlamp system are interrelated to each other.

The control device comprises a vehicle detecting section configured to receive image data obtained by taking an image of a region in front of a vehicle, and to detect a forward vehicle and a position of the forward vehicle on the basis of the image data, a map storage section, a pattern determining section configured to determine a light distribution pattern to be formed by a vehicle headlamp on the basis of the position of the forward vehicle and with reference to the map storage section, and an output section configured to output a control signal to the vehicle headlamp so that the light distribution pattern determined by the pattern determining section is formed. The control device further comprises a weather judging section configured to judge whether an environment in which the vehicle is traveling is in a weather condition that can cause an error in detecting the position of the forward vehicle. The map storage section is configured to store a plurality of maps that are for selecting the light distribution pattern to be formed by the vehicle headlamp on the basis of the position of the forward vehicle, wherein the plurality of maps includes a basic map and a weather adapted map, the weather adapted map being adapted to be used in said weather condition. The pattern determining section refers to the basic map to determine the light distribution pattern when the weather judging section judges that the environment is not in said weather condition, and refers to the weather adapted map to determine the light distribution pattern when the weather judging section judges that the environment is in said weather condition.

The vehicle headlamp is adapted to be controlled by the control device. The vehicle headlamp comprises a light source, a shade mechanism configured to form a plurality of light distribution patterns by shielding light from the light source, a shade actuator configured to move the shade mechanism. and a swivel actuator configured to swivel a lamp unit comprising the light source, the shade mechanism, and the shade actuator. Upon receipt of the control signal from the control device, at least one of the light source, the shade actuator and the swivel actuator are controlled to form the light distribution pattern determined by the pattern determining section.

The vehicle headlamp system comprises an imaging device configured to take an image of a region in front of a vehicle, the control device, and the vehicle headlamp. The image taken by the imaging device is sent to the vehicle detecting section as the image data.

Other aspects and advantages of the present invention will be apparent from the following description, the drawings and the claims.

Hereinafter, exemplary embodiments of the present invention will be described in detail with reference to the drawings including:
FIG. 1: a sectional view of a headlamp of a vehicle headlamp system according to an embodiment of the present invention;
FIG. 2: a perspective view of a rotary shade of the headlamp;
FIG. 3: a block diagram of the vehicle headlamp system including the headlamp, a control device for controlling light irradiation of the headlamp, and various input devices for supplying input information to the control device;
FIGS. 4A to 4F:
   diagrams showing examples of light distribution patterns to be selected by a pattern determining section;

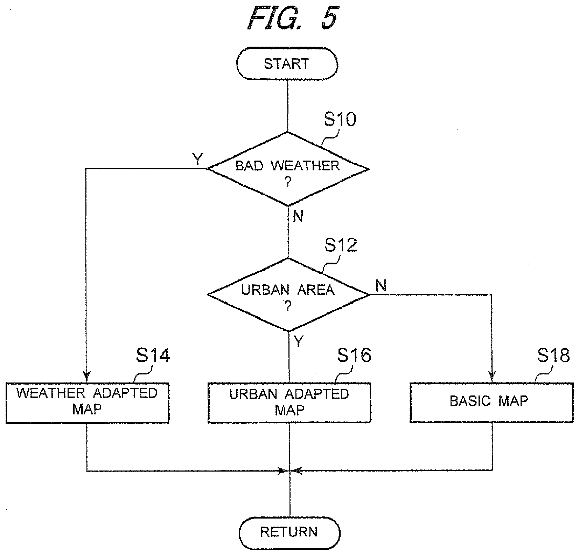

FIG. 5: a flowchart of an example of a light distribution pattern control;

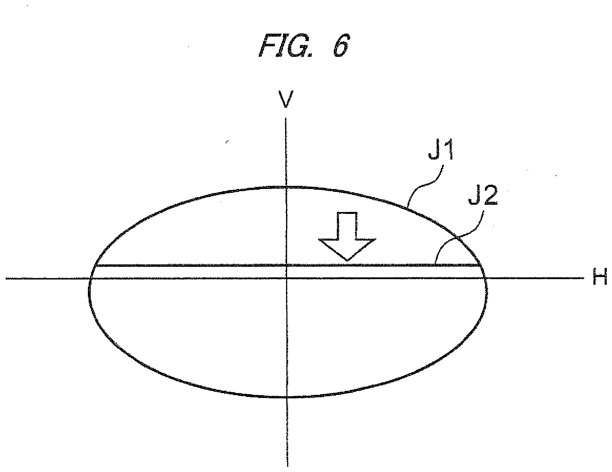

FIG. 6: a diagram illustrating an example of a basic high beam light distribution pattern and an example of a motorway high beam light distribution pattern;

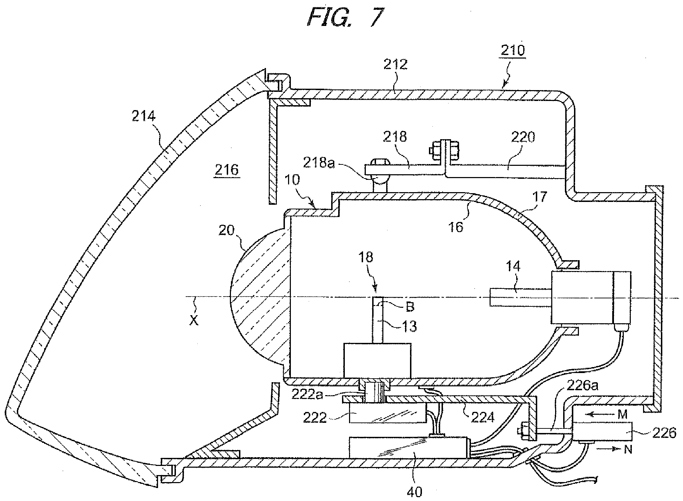

FIG. 7: a sectional view of a headlamp having a shade mechanism for forming the motorway high beam light distribution pattern; and

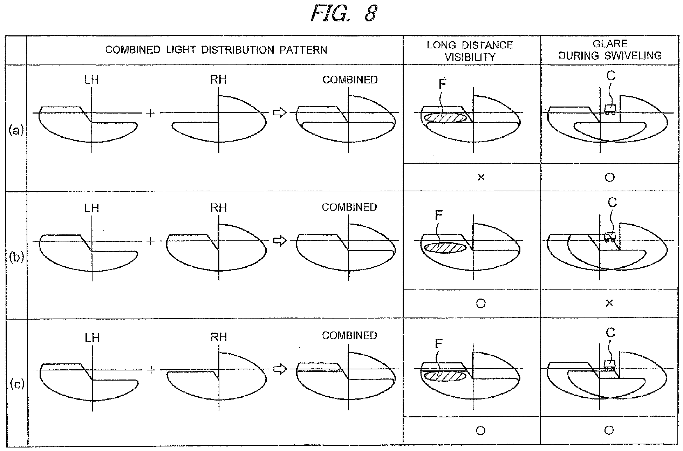

FIG. 8: a diagram showing a comparison between right-side high beam combined light distribution patterns according to the conventional art and an embodiment of the present invention.

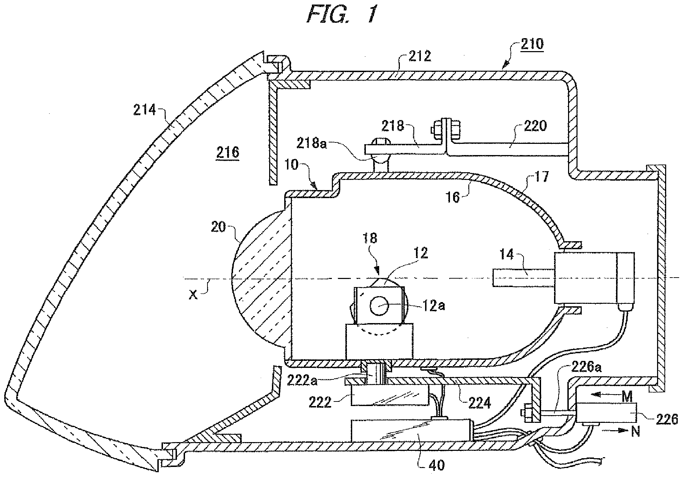

FIG. 1 is a schematic sectional view illustrating the internal structure of a headlamp 210 for use in a vehicle headlamp system 100 according to an embodiment of the present invention. FIG. 1 is a sectional view of the headlamp 210 seen from the left side, sectioned along a vertical plane containing the optical axis X of the lamp thereof. The headlamp 210 is a variable light distribution type headlamp disposed at each of the left and right sides of a vehicle in the width direction thereof. Since the vehicle headlamp disposed on the left side is substantially the same in structure to that disposed on the right side, they are described without particularly distinguishing between them.

The headlamp 210 has a lamp chamber 216 formed of a lamp body 212 having an opening section being open in the forward direction of the vehicle and a transparent cover 214 for covering the opening section of this lamp body 212. A lamp unit 10 for emitting light in the forward direction of the vehicle is accommodated in the lamp chamber 216. A lamp bracket 218 has a pivot mechanism 218a around which the lamp unit 10 can pivot. The lamp bracket 218 is connected to a body bracket 220 standing on the inner wall face of the lamp body 212 using a fastening member, such as a screw. Hence, the lamp unit 10 is secured at a predetermined position inside the lamp chamber 216. In addition, the lamp unit 10 can tilt around the pivot mechanism 218a and its orientation can be changed to a forwardly inclined orientation or a rearwardly inclined orientation, for example.

Furthermore, the rotation shaft 222a of a swivel actuator 222 for an adaptive front-lighting system (AFS) for emitting light in the traveling direction of the vehicle when the vehicle travels on a curved road, for example, is secured to the lower face of the lamp unit 10. The swivel actuator 222 swivels the lamp unit 10 around the pivot mechanism 218a in the traveling direction of the vehicle on the basis of the data of the steering amount provided from the vehicle, the data of the road shape provided from a navigation system, a positional relationship to the forward vehicle, etc. As a result, the area illuminated by the lamp unit 10 is directed ahead of the curved road instead of the forward area of the vehicle, whereby the front visual field of the driver of the vehicle is improved. The swivel actuator 222 can be formed of a stepping motor, for example. In the case that the swiveling angle of the mechanism has a fixed value, it is possible to use a solenoid, for example.

The swivel actuator 222 is secured to a unit bracket 224. A leveling actuator 226 disposed outside the lamp body 212 is connected to the unit bracket 224. The leveling actuator 226 is formed of, for example, a motor that is used to extend and retract the rod 226a thereof in the directions indicated by arrows M and N. In the case that the rod 226a is extended in the direction indicated by arrow M, the lamp unit 10 is tilted around the pivot mechanism 218a so as to have the rearwardly inclined orientation. Conversely, in the case that the rod 226a is retracted in the direction indicated by arrow N, the lamp unit 10 is tilted around the pivot mechanism 218a so as to have the forwardly inclined orientation. When the lamp unit 10 has the rearwardly inclined orientation, leveling adjustment for directing the optical axis thereof upward can be carried out. Furthermore, when the lamp unit 10 has the forwardly inclined orientation, leveling adjustment for directing the optical axis downward can be carried out. The optical axis can thus be adjusted depending on the orientation of the vehicle by carrying out the leveling adjustment in this way. As a result, the travel distance of the light emitted forward from the headlamp 210 can be adjusted to an optimal distance.

A lamp control unit 40 for controlling the ON/OFF operation of the lamp unit 10 and for controlling the formation of a light distribution pattern is disposed on the inner wall face of the lamp chamber 216, for example, below the lamp unit 10. This lamp control unit 40 also controls the operations of the swivel actuator 222 and the leveling actuator 226.

The lamp unit 10 is formed of a shade mechanism 18 including a rotary shade 12, a light source 14 serving as a light source, a lamp housing 17 for supporting a reflector 16 on the inner wall thereof, and a projection lens 20. For example, an incandescent lamp, a halogen lamp, a discharge lamp or an LED lamp can be used as the light source 14. In this embodiment, an example in which a halogen lamp is used as the light source 14 is described. The reflector 16 reflects the light emitted from the light source 14. Part of the light emitted from the light source 14 and part of the light reflected by the reflector 16 are guided to the projection lens 20 via the rotary shade 12 constituting the shade mechanism 18.

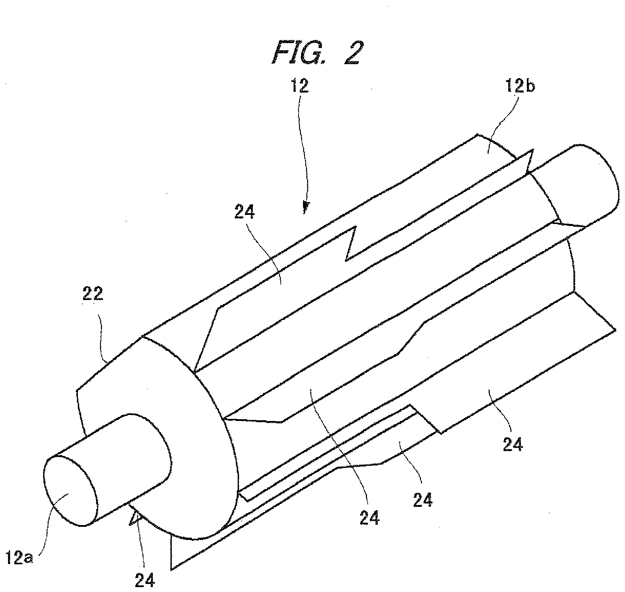

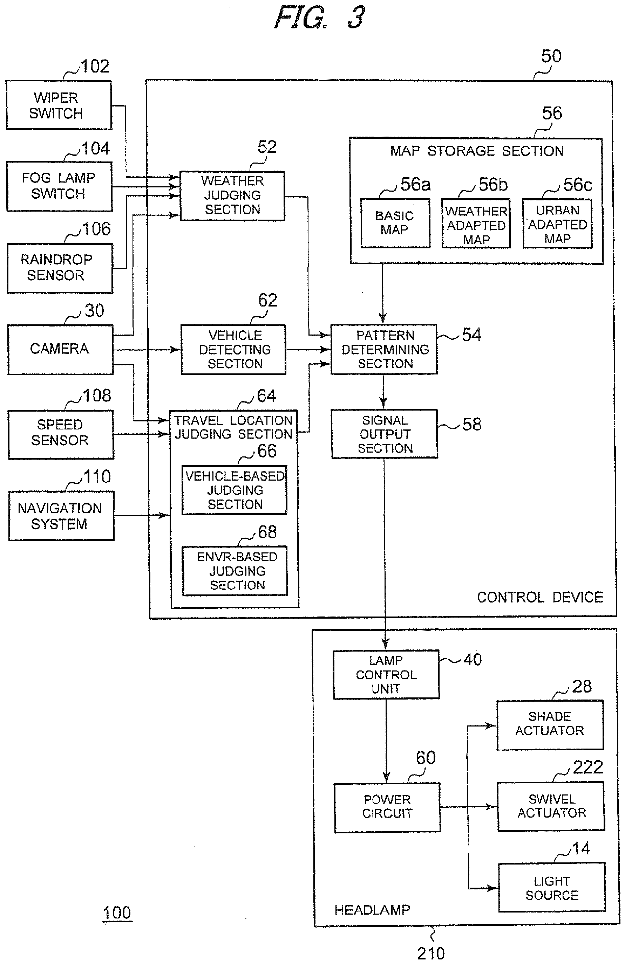

FIG. 2 is a schematic perspective view showing the rotary shade 12. The rotary shade 12 is a cylindrical member that is rotated around the rotation shaft 12a thereof by a shade motor (a shade actuator 28 shown in FIG. 3) . The rotary shade 12 has a cutout portion 22 obtained by partially cutting out the rotary shade 12 in the axial direction thereof, and a plurality of shade plates 24 disposed on the outer circumferential face 12b other than the face of the cutout portion 22. The cutout portion 22 or one of the shade plates 24 of the rotary shade 12 can be moved to the position of the rear focal plane including the rear focal point of the projection lens 20 depending on the rotation angle of the rotary shade 12. Hence, a light distribution pattern corresponding to the shape of the ridge line portion of the shade plate 24 positioned on the optical axis X is formed depending on the rotation angle of the rotary shade 12. For example, a low beam light distribution pattern or a light distribution pattern partially having the characteristic of the low beam light distribution pattern is formed by moving one of the shade plates 24 of the rotary shade 12 to the optical axis X and by shielding part of the light emitted from the light source 14. Furthermore, a high beam light distribution pattern is formed by moving the cutout portion 22 to the optical axis X so that the light emitted from the light source 14 is not shielded.

The rotary shade 12 is driven by a motor, for example, so as to be rotatable. One of the shade plates 24 for forming a desired light distribution pattern or the cutout portion 22 is moved onto the optical axis X by controlling the rotation amount of the motor. The rotary shade 12 may be provided with only a light-shielding function by eliminating the cutout portion 22 from the outer circumferential face 12b of the rotary shade 12. Furthermore, in the case of forming the high beam light distribution pattern, the rotary shade 12 is retracted from the position of the optical axis X by driving a solenoid, for example. With this configuration, even if the motor for rotating the rotary shade 12 fails, the light distribution pattern is fixed to the low beam light distribution pattern or a light distribution pattern similar thereto. In other words, a situation in which the rotary shade 12 is fixed at an angle at which the high beam light distribution pattern is formed can be avoided securely, and a fail-safe function can be realized.

The projection lens 20 is disposed on the optical axis X extending in the front-rear direction of the vehicle, and the light source 14 is disposed behind the rear focal plane of the projection lens 20. The projection lens 20 is formed of a plane-convex aspheric lens in which the surface on the front side is a convex face and the surface on the rear side is a plane face. The projection lens 20 projects a light source image formed on the rear focal plane thereof on an imaginary vertical screen disposed ahead of the lamp unit 10 as a reverted image.

FIG. 3 is a view showing a configuration of the vehicle headlamp system 100 including the headlamps 210 configured as described above, a control device 50 for determining the light distribution pattern to be formed by the headlamps 210, and various input devices for supplying input information to the control device 50. While only one headlamp 210 is illustrated in FIG. 3, the control device controls both of the right and left headlamps 210. The lamp control unit 40 may not be provided in each of the headlamps 210, and may be provided outside the headlamps 210 and may be configured as a common control unit for both of the right and left headlamps 210.

Referring to FIG. 3, the respective blocks of the control device 50 can be accomplished by hardware using devices, such as the CPU and memory of a computer, and accomplished by software using computer programs, etc. loaded into the memory. However, the blocks herein indicate function blocks that are accomplished by the cooperation among them. For this reason, it will be understood by those skilled in the art that these function blocks can be accomplished in various ways by the combination of hardware and software.

In this embodiment, a wiper switch 102, a fog lamp switch 104, a raindrop sensor 106, a camera 30 (an imaging device), a vehicle speed sensor 108, and a navigation system 110 are included as the input devices.

The wiper switch 102 is a switch that is operated by the driver of the vehicle to turn ON/OFF a wiper apparatus (not shown) installed in the vehicle. The fog lamp switch 104 is a switch that is operated by the driver to turn ON/OFF a fog lamp (not shown) installed in the vehicle. The raindrop sensor 106 is a sensor for judging whether the weather is rainy by applying light to the windshield and by detecting the light reflected thereby. The raindrop sensor 106 is not required to be installed.

The camera 30 is mounted on the vehicle to capture an image of a region ahead of the vehicle so as to serve as object recognizing means for detecting objects, such as a preceding vehicle, an oncoming vehicle and a pedestrian. The camera 30 may be a camera dedicatedly controlled by the control device 50 or may be a camera shared by another system.

The vehicle speed sensor 108 is a sensor disposed in the vicinity of a wheel (not shown) of the vehicle to detect the rotation speed of the wheel, thereby obtaining the speed of the vehicle. The navigation system 110 is a system for providing various kinds of information around the vehicle by using a vehicle position detection section, such as a GPS (global positioning system), and map data prepared in advance.

Based on the information obtained from the above-mentioned various input devices, the control device 50 instructs the headlamp 210 to generate an appropriate light distribution pattern. The control device 50 includes a weather judging section 52, a pattern determining section 54, a map storage section 56, a signal output section 58, a vehicle detecting section 62, and a traveling location judging section 64.

The weather judging section 52 judges whether the weather in the area in which the vehicle travels is bad weather. "Bad weather" is defined as a weather condition in which the vehicle detecting section 62 may cause a detection error when detecting the position of the forward vehicle on the basis of image data. More specifically, bad weather is defined as a weather condition in which forward visibility is directly impaired by rain, fog, snow, etc. or water that may cause diffused reflection of light is present on the road surface, etc.

The weather judging section 52 judges whether the weather is bad weather on the basis of the information from the wiper switch 102, the fog lamp switch 104 or the raindrop sensor 106. More specifically, the weather judging section 52 judges that the weather is bad weather when the wiper switch 102 or the fog lamp switch 104 is at its ON state. Alternatively, the weather judging section 52 judges that the weather is bad weather when raindrops are detected on the windshield by the raindrop sensor 106. The weather judging section 52 may judge that the weather is bad weather when the period during which raindrops were detected by the raindrop sensor 106 has reached a predetermined value or more so as not to judge that the weather is bad weather when the windshield is temporarily cleaned by the wiper apparatus. The weather judging section 52 may also judge that the weather is bad weather when the speed of the wiper blade of the wiper apparatus has reached a predetermined value or more so as not to judge that the weather is bad weather when slight rain fails, for example.

Upon receiving the image data obtained by taking an image of a region ahead of the vehicle using the camera 30, the vehicle detecting section 62 detects the position of the forward vehicle by searching for characteristics indicating vehicles in the image data. Since this kind of method for detecting the position of the forward vehicle is known, the detailed description thereof is omitted.

The traveling location judging section 64 judges whether the area in which the vehicle is traveling is an urban area. The traveling location judging section 64 includes a vehicle-based judging section 66 and an environment-based judging section 68. "Urban area" is an area in which there are relatively large amounts of light sources other than those of the forward vehicle and an area conforming to the following conditions.

The vehicle-based judging section 66 judges whether the vehicle is traveling in an urban area on the basis of the number of times the vehicle stops. More specifically, the vehicle-based judging section 66 counts the number of times the vehicle stopped per unit time on the basis of the change in the output from the vehicle speed sensor 108 or the operation of the brake pedal (not shown), for example. In the case that the vehicle stopped two or more times in five minutes, for example, the vehicle-based judging section 66 judges that the vehicle is traveling in an urban area. This judgment is based on the fact that the vehicle stops frequently at red traffic lights and in traffic jams when the vehicle is traveling in an urban area.

The vehicle-based judging section 66 may also judge whether the vehicle is traveling in an urban area on the basis of the average speed of the vehicle instead of the number of times the vehicle stops. More specifically, the vehicle-based judging section 66 calculates the average speed of the vehicle by performing moving average processing on the speed information from the vehicle speed sensor 108 at predetermined time intervals. For example, in the case that the average speed of the vehicle is 30 km/h or less, the vehicle-based judging section 66 judges that the vehicle is traveling in an urban area. This judgment is based on the fact that the speed of the vehicle decreases because of red traffic lights, traffic jams, etc. when the vehicle is traveling in an urban area.

The environment-based judging section 68 judges whether the vehicle is traveling in an urban area on the basis of image data taken by the camera 30. More specifically, the environment-based judging section 68 analyzes the image data and obtains one or more of the following: the number of traffic lights or the distance therebetween, the number of street lights or the distance therebetween, and the number of pedestrian crosswalks or the distance therebetween. These may be obtained by matching the sample image of a traffic light or a pedestrian crosswalk with the image data from the camera 30 or by detecting a color (i.e., green, yellow or red for traffic lights, and white for pedestrian crosswalks) from the image data. The number of street lights or distance therebetween may be obtained by detecting the number of light spots in the image data. Any known image processing techniques can be used to detect these.

In the case that any one or predetermined two or more of the number of traffic lights or the distance therebetween, the number of street lights or the distance therebetween, and the number of pedestrian crosswalks or the distance therebetween are predetermined upper limit values or more, the environment-based judging section 68 judges that the vehicle is traveling in an urban area. This judgment is based on the fact that the numbers of traffic lights, street lights and pedestrian crosswalks in an urban area are larger than those in a suburban area.

The environment-based judging section 68 judges whether the vehicle is traveling in an urban area on the basis of the average luminance of the image data taken by the camera 30. More specifically, the environment-based judging section 68 calculates the average luminance of a range other than a predetermined range on the basis of the image data. The predetermined range is a road surface, for example. The average luminance is obtained by averaging the luminance values of the respective pixels constituting the image data. In the case that the average luminance is equal to a predetermined upper limit value or more, the environment-based judging section 68 judges that the vehicle is traveling in an urban area. This judgment is based on the fact that numerous light sources, such as street lights and building illuminations, are present around the vehicle in an urban area and that the average luminance of an image in an urban area is higher than that of an image in a suburban area.

Alternatively, the environment-based judging section 68 may judge whether the vehicle is traveling in an urban area on the basis of the information obtained from the navigation system 110. More specifically, the environment-based judging section 68 refers to the map data of the road on which the vehicle is traveling and obtains the number of traffic lights or the distance therebetween, the number of street lights or the distance therebetween, and the number of pedestrian crosswalks or the distance therebetween along the road. In the case that any one or predetermined two or more of these values are predetermined upper limit values or more, the environment-based judging section 68 judges that the vehicle is traveling in an urban area.

When it is judged that the vehicle is traveling in an urban area by one or both of the vehicle-based judging section 66 and the environment-based judging section 68, the traveling location judging section 64 transmits this judgment information to the pattern determining section 54.

The pattern determining section 54 basically determines a light distribution pattern formed by the left and right headlamps 210 so that the area ahead of the vehicle is irradiated by the light having an optimal light distribution pattern depending on the presence of the forward vehicle and the change of the position of the forward vehicle detected by the vehicle detecting section 62.

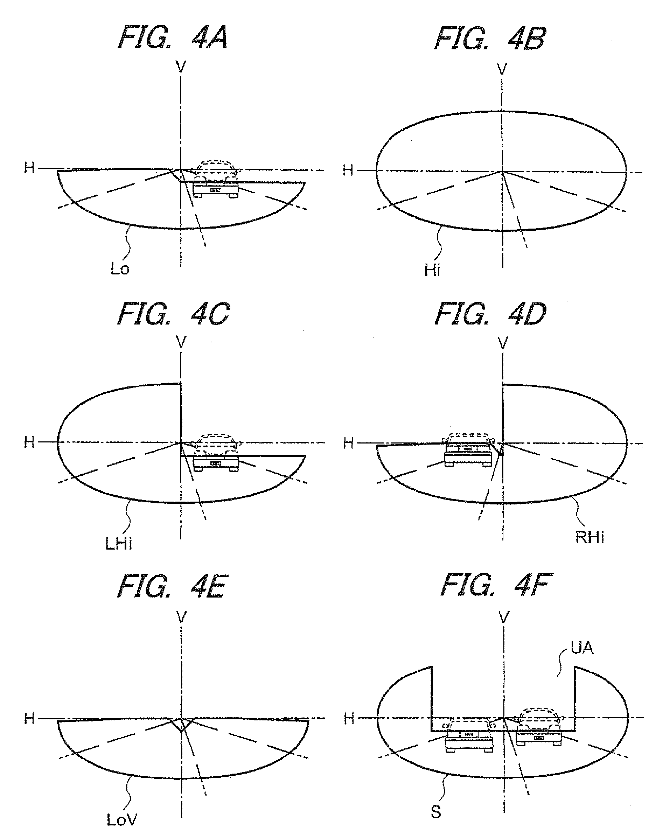

FIGS. 4A to 4F are views showing light distribution patterns to be selected by the pattern determining section 54 and capable of being formed by the headlamps 210. FIGS. 4A to 4F show light distribution patterns formed on the imaginary vertical screen disposed 25 an ahead of the headlamps 210. The light distribution patterns shown in FIGS. 4A to 4F are combined light distribution patterns, each being formed by superimposing the light distribution patterns respectively formed by the headlamps 210 disposed on the left and right sides of the vehicle in the width direction thereof.

FIGS. 4A shows a low beam light distribution pattern Lo. This low beam light distribution pattern Lo is a light distribution pattern designed in consideration of not giving glare to a forward vehicle and a pedestrian when the vehicle travels in a left-hand traffic lane. The low beam light distribution pattern Lo has an oncoming lane side cutoff line located at the upper end thereof and extending in parallel with the horizontal line H on the right side of the vertical line V; an ongoing lane side cutoff line located at a position higher than that of the oncoming lane side cutoff line and extending in parallel with the horizontal line H on the left side of the vertical line V; and an oblique cutoff line disposed between the oncoming lane side cutoff line and the ongoing lane side cutoff line so as to be connected to the two cutoff lines. The oblique cutoff line extends from the intersection of the oncoming lane side cutoff line and the V-V line upward in a left oblique direction at an oblique angle of 45°.

FIG. 4B shows a high beam light distribution pattern Hi. This high beam light distribution pattern Hi is a light distribution pattern for illuminating a forward wide range and a remote distance and is formed in the case that it is not necessary to consider glare that is given to a forward vehicle and a pedestrian, for example.

FIG. 4C shows a left-side high beam light distribution pattern LHi that is used in a left-hand traffic region. The left-side high beam light distribution pattern LHi is a special high beam light distribution pattern in which the pattern on the oncoming lane side of the high beam light distribution pattern Hi is shielded when the vehicle travels in a left-hand traffic lane and only the pattern on the ongoing lane side is illuminated by the high beam area. The left-side high beam light distribution pattern LHi is formed by synthesizing the left-side high beam light distribution pattern formed by the left headlamp 210 with the low beam light distribution pattern formed by the right headlamp 210. The left-side high beam light distribution pattern LHi is suitable when neither preceding vehicle nor pedestrian is present on the ongoing lane side and an oncoming vehicle or a pedestrian is present on the oncoming lane side. That is, the left-side high beam light distribution pattern LHi is designed such that glare is not given to the driver of the oncoming vehicle or the pedestrian in the oncoming lane while the forward visibility of the driver of the vehicle is improved.

FIG. 4D shows a right-side high beam light distribution pattern RHi that is used in a left-hand traffic region. The right-side high beam light distribution pattern RHi is a special high beam light distribution pattern in which the pattern on the ongoing lane side of the high beam light distribution pattern Hi is shielded when the vehicle travels in the left-hand traffic lane and only the pattern on the oncoming lane side is illuminated by the high beam area. The right-side high beam light distribution pattern RHi is formed by synthesizing the right-side high beam light distribution pattern formed by the right headlamp 210 with the low beam light distribution pattern formed by the left headlamp 210. The right-side high beam light distribution pattern RHi is suitable when a preceding vehicle or a pedestrian is present on the ongoing lane side and neither oncoming vehicle nor pedestrian is present on the oncoming lane side. That is, the right-side high beam light distribution pattern RHi is designed such that glare is not given to the driver of the preceding vehicle or the pedestrian in the ongoing lane while the forward visibility of the driver of the vehicle is improved.

FIG. 4E shows a V-beam light distribution pattern LoV in which the light to be applied to the vicinity of the intersection of the vertical line V and the horizontal line H on the imaginary vertical screen is suppressed. For example, this V-beam light distribution pattern LoV is formed as described below. The low beam light distribution pattern shown in FIG. 4A is formed using the left headlamp 210. On the other hand, the low beam light distribution pattern that is used in a right-hand traffic region is formed using the right headlamp 210. In other words, a light distribution pattern being symmetric with the light distribution pattern shown in FIG. 4A with respect to the vertical line V is formed. These two different light distribution patterns are superimposed with each other. As a result, it is possible to form the V-beam light distribution pattern LoV in which the light to be applied to the vicinity of the intersection of the vertical line V and the horizontal line H, wherein a distant preceding vehicle or a distant oncoming vehicle may be present, is suppressed. That is, the V-beam light distribution pattern LoV is capable of allowing the driver of the vehicle to easily recognize obstacles, etc. on the road shoulders on the ongoing lane side and the oncoming lane side while suppressing glare to the driver of the distant oncoming vehicle.

FIG. 4F shows a split light distribution pattern S. This split light distribution pattern S is a special high beam light distribution pattern having a light-shielding area UA in the central section thereof above the horizontal line H and having high beam areas on both sides of the light-shielding area UA in the horizontal direction. The split light distribution pattern S can be formed by superimposing the left-side high beam light distribution pattern formed using the left headlamp 210 and the right-side high beam light distribution pattern formed using the right headlamp 210. When the split light distribution pattern S is formed, the two light distribution patterns described above are superimposed so that the high beam area of the left-side high beam light distribution pattern does not make contact with the high beam area of the right-side high beam light distribution pattern, whereby he light-shielding area UA is formed.

The range of the light-shielding area UA can be changed in the horizontal direction by swiveling the left and right headlamps 210 so that at least one of the left-side high beam light distribution pattern and the right-side high beam light distribution pattern is moved in the horizontal direction.

In addition to the above-mentioned light distribution patterns, combined light distribution patterns having any shapes can be formed by combining shades having shapes different between the left and right headlamps 210. Since this kind of ADB system itself, which is capable of changing the light distribution pattern depending on the position of the forward vehicle, is known, no further detailed description is provided in this specification.

Returning to FIG. 3, the map storage section 56 is configured to hold a plurality of maps that are used to select light distribution patterns to be formed by the headlamps 70 on the basis of the position of the forward vehicle. For example, the map storage section 56 holds a basic map56a, a weather adapted map 56b and an urban adapted map 56c. Each of these maps may be a two-dimensional map in which a light distribution pattern is determined depending on the horizontal and vertical positions of the forward vehicle appearing in an image of an area ahead of the vehicle. Alternatively, each of the maps may be a table-type map characterized in that the image of the area ahead of the vehicle is divided into a plurality of sections and that a light distribution pattern is determined for each section in which the forward vehicle is positioned. Since the maps themselves are known, no further detailed description is provided in this specification.

In the case that the weather judging section 52 judges that the weather in the area in which the vehicle is traveling is bad weather, the pattern determining section 54 limits the level of the cutoff line, the luminance, etc. of the light distribution pattern. More specifically, the pattern determining section 54 refers to the weather adapted map 56b stored in the map storage section 56 and selects a light distribution pattern corresponding to the position of the forward vehicle detected by the vehicle detecting section 62.

The weather adapted map 56b is formed so as to have the following characteristics, for example.
- Unlike the basic map56a, the weather adapted map 56b does not include some light distribution patterns (for example, the high beam light distribution pattern and the one-side high beam light distribution patterns). For example, the weather adapted map 56b includes only the low beam light distribution pattern and the V-beam light distribution pattern. In this case, the level of the cutoff line of the V-beam light distribution pattern may be set so as to be lower than that of the V-beam light distribution pattern in the basic map56a.
- The levels of the cutoff lines of the high beam light distribution pattern and the one-side high beam light distribution patterns are set so as to be lower than those of the corresponding patterns in the basic map56a.
- The luminous intensity of the light source 14 is made lower than that during the normal weather to lower the illuminance of the light distribution pattern. The outline of the light distribution pattern may be the same as that during the normal weather.
- The weather adapted map 56b is formed of a plurality of weather adapted maps. For example, a map in the case that vehicle speed is high (e.g., 60 km/h or more) is configured so as to include the high beam light distribution pattern, the one-side high beam light distribution patterns and the split light distribution pattern. A map in the case that vehicle speed is middle (e.g., 30 to 60 km/h) is configured so as to include the V-beam light distribution pattern and the low beam light distribution pattern. A map in the case that vehicle speed is low (e.g., 30 km/h or less) is configured so as to include only the low beam light distribution pattern.

The light distribution pattern to be used during normal weather and the light distribution pattern to be used during bad weather are made different from each other because of the following reasons. That is, during bad weather, such as rain, snow or dense fog, forward visibility is lowered, and the tail lamps of the preceding vehicle and the headlamps of the oncoming vehicle cannot be detected accurately from the captured images sometimes. When the forward vehicle cannot be detected, the high beam light distribution pattern is selected by the ADB system. As a result, the driver of the forward vehicle may receive a glare, or an optical film phenomenon in which the irradiation light is reflected by the water on the road surface may occur, which would blind the driver of the vehicle. Hence, the high beam light distribution pattern is not selected or the illuminance thereof is lowered during bad weather, whereby glare to the driver of the forward vehicle can be suppressed and the occurrence of the optical film phenomenon can be prevented.

Furthermore, in the case that the traveling location judging section 64 judges that the vehicle is traveling in an urban area, the pattern determining section 54 imposes limitations, such as the stoppage of the ADB system itself or the avoidance of the use of specific light distribution patterns. More specifically, the pattern determining section 54 refers to the urban adapted map 56c stored in the map storage section 56 and selects a light distribution pattern corresponding to the position of the forward vehicle detected by the vehicle detecting section 62.

The urban adapted map 56c is formed so as to have the following characteristics, for example.
- Control for changing the light distribution pattern is not performed. For example, the light distribution pattern is fixed to the low beam light distribution pattern.
- Unlike the basic map56a, the urban adapted map 56c does not include some light distribution patterns (e.g., the high beam light distribution pattern and the one-side high beam light distribution patterns). For example, the urban adapted map 56c includes only the low beam light distribution pattern and the V-beam light distribution pattern.

The light distribution pattern is changed as described above when the vehicle is traveling in an urban area because of the following reasons. That is, numerous light sources, such as street lights and building illuminations, other than the lamps of vehicles are present in an urban area at night, whereby an error is apt to occur when detecting the position of the forward vehicle because of the presence of these light sources. Since the light distribution pattern is switched each time the position of the forward vehicle is detected erroneously, this switching occurs frequently. As a result, there is a danger that an uncomfortable feeling is given to the driver of the vehicle or glare is given to the drivers of the other vehicles or pedestrians. Hence, the operation of the ADB system is stopped or the use of some light distribution patterns is prohibited to reduce the number of times the light distribution pattern is switched. As a result, the uncomfortable feeling to the driver is reduced and the generation of glare is suppressed.

The signal output section 58 outputs a corresponding control signal to the lamp control unit 40 of the headlamp 210 so that the light distribution pattern determined by the pattern determining section 54 is formed.

The headlamp 210 includes the lamp control unit 40, a power circuit 60, a shade motor 28, the swivel actuator 222, and the light source 14.

The lamp control unit 40 receives the signal from the control device 50 and controls the shade motor 28, the swivel actuator 222 and the light source 14 through the power circuit 60 so that the determined light distribution pattern is formed by the headlamp.

Next, the operation of the control device 50 shown in FIG. 3 will be described below. When the weather judging section 52 judges that the vehicle is traveling during bad weather, the pattern determining section 54 refers to the weather adapted map 56b and selects a light distribution pattern to be formed by the headlamps 210. When the traveling location judging section 64 judges that the vehicle is traveling in an urban area, the pattern determining section 54 refers to the urban adapted map 56c and selects a light distribution pattern to be formed by the headlamps 210. In the cases other than those described above, the pattern determining section 54 refers to the basic map56a and selects a light distribution pattern to be formed by the headlamps 210. The lamp control unit 40 controls the headlamps 70 so that the selected light distribution pattern is formed.

FIG. 5 is a flowchart of a light distribution pattern control according to this embodiment. The processing of this flowchart is executed repeatedly at predetermined time intervals in the control device 50.

The weather judging section 52 judges whether the weather in the area in which the vehicle is traveling is bad weather on the basis of the information from the wiper switch 102, the fog lamp switch 104 or the raindrop sensor 106 (S10). In the case that it is judged that the weather is bad weather (S10; Y), the pattern determining section 54 determines a combined light distribution pattern to be formed by the headlamps 70 on the basis of the weather adapted map 56b inside the map storage section 56 and the position of the forward vehicle (S14). In the case that it is judged that the weather is not bad weather (S10; N), the traveling location judging section 64 judges whether the vehicle is traveling in an urban area (S12). In the case that it is judged that the vehicle is traveling in an urban area (SI2; Y), the pattern determining section 54 determines a combined light distribution pattern to be formed by the headlamps 70 on the basis of the urban adapted map 56c inside the map storage section 56 and the position of the forward vehicle (S16). In the case that it is judged that the vehicle is not traveling in an urban area (S12; N), the pattern determining section 54 determines a combined light distribution pattern to be formed by the headlamps 70 on the basis of the basic map56a inside the map storage section 56 and the position of the forward vehicle (S18).

As described above, with this embodiment, in the vehicle headlamp system having a function capable of changing the light distribution patterns and the light distribution directions of the headlamps on the basis of the position of the forward vehicle detected from an image obtained by taking an image of a region ahead of the vehicle, the formation of specific light distribution patterns can be prohibited depending on the weather. Hence, it is possible to prevent a situation in which the light distribution pattern is changed inappropriately because the position of the forward vehicle cannot be detected accurately owing to the influence of bad weather.

Furthermore, when it is judged that the vehicle is traveling in an urban area, the formation of specific light distribution patterns can be prohibited. Hence, it is possible to prevent a situation in which the light distribution pattern is changed inappropriately because the position of the forward vehicle cannot be detected accurately owing to the presence of light sources other than the lamps of vehicles in the urban area.

The traveling location judging section 64 may judge whether the vehicle is traveling on a motorway, instead of, or in addition to the judgment of whether the vehicle is traveling in an urban area. The traveling location judging section 64 may judge that the vehicle is traveling on a motorway when the vehicle speed obtained by the vehicle speed sensor 108 is a predetermined speed or more. Alternatively, the traveling location judging section 64 may judge that the vehicle is traveling on a motorway on the basis of the vehicle position information obtained from navigation system 110. In the case that it is judged that the vehicle is traveling on a motorway, the pattern determining section 54 selects a motorway high beam light distribution pattern in which the amount of beam diffusion in the upward direction is made smaller than that of the basic high beam, instead of the light distribution pattern control based on the above-mentioned normal weather map.

FIG. 6 shows an example of a basic high beam light distribution pattern 31 and an example of a motorway high beam light distribution pattern 32. As shown in FIG. 6, in the motorway high beam light distribution pattern J2, the irradiation range above the horizontal line is reduced. This reduction is based on the fact that the amount of beam diffusion of the high beam light distribution pattern in the upward direction can be made smaller than that of the basic high beam light distribution pattern because anti-dazzle fences are installed along a motorway and it is enough that the driver of the vehicle can see only the road surface and guard rails. Furthermore, with this reduction, even if a truck or the like, the eye level of the driver thereof is higher than the height of the anti-dazzle fences, is present in the oncoming lane, there is no danger of giving glare to the driver.

FIG. 7 is a view illustrating a shade structure for forming the motorway high beam light distribution pattern. The internal structure of the headlamp 210 shown in FIG. 7 is similar to that of the headlamp 210 shown in FIG. 1 except that a movable shade 13 being movable in the up-down direction is provided instead of the rotary shade. When the movable shade 13 is moved to its uppermost position by a shade actuator, the basic high beam light distribution pattern is formed. When the movable shade 13 is moved to its intermediate position indicated by broken line B, the motorway high beam light distribution pattern is formed. When the movable shade 13 is moved to its lowermost position, the low beam light distribution pattern is formed.

When the system is configured such that the traveling location judging section 64 judges whether the vehicle is traveling in an urban area and also whether the vehicle is traveling on a motorway, the headlamp 210 is configured to have both the rotary shade 12 shown in FIG. 1 and the movable shade 13 shown in FIG. 7.

In this embodiment, the left-side high beam light distribution pattern and the right-side high beam light distribution pattern are described referring to FIGS. 4C and 4D. Instead of these, a combined light distribution pattern may be formed in which the level of the cutoff line of the light distribution pattern of the right headlamp for forming a one-side high beam combined light distribution pattern on the ongoing lane side is set so as not to be higher than the horizontal line.

FIG. 8 is a diagram showing a comparison between right-side high beam combined light distribution patterns according to the conventional art and that according to this embodiment. In FIG. 8, (a) and (b) show the right-side high beam combined light distribution patterns according to the conventional art, and (c) shows the right-side high beam combined light distribution patterns according to this embodiment. Further, "LH" represents a high beam light distribution pattern formed only by the left headlamp 210, and "RH" represents a high beam light distribution pattern formed only by the right headlamp 210. "Combined" represents a combined light distribution pattern formed by the left and right headlamps 210. Furthermore, FIG. 8 shows the results of the evaluation of the long distance visibility on the ongoing lane side, that is, the evaluation of the luminance in the range indicated by "F", and also shows the results of the evaluation of glare caused for the driver of an oncoming vehicle when a split light distribution pattern is formed by swiveling the left and right lamp units.

The combined light distribution pattern shown in (a) of FIG. 8 is examined in which the ongoing lane side (the left side in a left-hand traffic region) of the left high beam light distribution pattern LH includes a range higher than the horizontal line and the ongoing lane side of the right high beam light distribution pattern RH includes only a range lower than the horizontal line. In this case, the range F can be irradiated only by the left lamp, whereby the long distance visibility in the ongoing lane is not high. Hence, "×" is indicated. On the other hand, when the split light distribution pattern is formed, the area around an oncoming vehicle C is not illuminated, whereby no glare is given to the driver of the oncoming vehicle. Hence, "o" is indicated.

The combined light distribution pattern shown in (b) of FIG. 8 is examined in which the ongoing lane side (the left side in a left-hand traffic region) of the left high beam light distribution pattern LH includes a range higher than the horizontal line and the ongoing lane side of the right high beam light distribution pattern RH also includes a range higher than the horizontal line. In this case, the range F is irradiated by the left and right lamps (two lamps), whereby the long distance visibility in the ongoing lane is high. Hence, "o" is indicated. On the other hand, when the split light distribution pattern is formed, the area around the oncoming vehicle C is illuminated eventually. As a result, glare is given to the driver of the oncoming vehicle. Hence, "×" is indicated.

In comparison with these, the combined light distribution pattern shown in (c) of FIG. 8 is characterized in that the ongoing lane side of the right high beam light distribution pattern RH has a shape, the cutoff line of which is slightly lower than the horizontal line, although the left high beam light distribution pattern LH is the same as those shown in (a) and (b). The combined light distribution pattern formed in this case is examined. The range F is irradiated by the left and right lamps (two lamps), whereby the long distance visibility in the ongoing lane is high. Hence, "○" is indicated. Moreover, when the split light distribution pattern is formed, the area around the oncoming vehicle C is not illuminated, whereby glare is not given to the driver of the oncoming vehicle. Hence, "o" is indicated.

In the right-side high beam combined light distribution pattern obtained by adopting such a light distribution pattern shape as that shown in (c) of FIG. 8 as described above, glare can be prevented from being given to the driver of the oncoming vehicle even when the lamp units are swiveled, while the long distance visibility in the ongoing lane is ensured.

## Claims

1. A control device (50) comprising:
a vehicle detecting section (62) configured to receive image data obtained by taking an image of a region in front of a vehicle, and to detect a forward vehicle and a position of the forward vehicle on the basis of the image data;
a map storage section (56);
a pattern determining section (54) configured to determine a light distribution pattern (Lo, Hi, LHi, RHi, LoV, S, J1, J2) to be formed by a vehicle headlamp (210) on the basis of the position of the forward vehicle and with reference to the map storage section (56); and
an output section (58) configured to output a control signal to the vehicle headlamp (210) so that the light distribution pattern (Lo, Hi, LHi, RHi, LoV, S, J1, J2) determined by the pattern determining section (54) is formed,
**characterized in that** the control device (50) further comprises a weather judging section (52) configured to judge whether an environment in which the vehicle is traveling is in a weather condition that can cause an error in detecting the position of the forward vehicle on the basis of information from a wiper switch (102), a fog lamp switch (104) or a raindrop sensor (106),
the map storage section (56) is configured to store a plurality of maps that are for selecting the light distribution pattern (Lo, Hi, LHi, RHi, LoV, S, J1, J2) to be formed by the vehicle headlamp (210) on the basis of the position of the forward vehicle, wherein the plurality of maps includes a basic map (56a) and a weather adapted map (56b), the weather adapted map (56b) being adapted to be used in said weather condition, and
the pattern determining section (54) refers to the basic map (56a) to determine the light distribution pattern (Lo, Hi, LHi, RHi, LoV, S, J1) when the weather judging section (52) judges that the environment is not in said weather condition, and refers to the weather adapted map (56b) to determine the light distribution pattern (Lo, Hi, LHi, RHi, LoV, S, J1) when the weather judging section (52) judges that the environment is in said weather condition
wherein the weather adapted map (56b) is configured such that:
when the pattern determining section (54) refers to the weather adapted map (56b), a cutoff line of the light distribution pattern (Lo, Hi, LHi, RHi, LoV, S, J1) is lower than when the pattern determining section (54) refers to the basic map (56a), and/or
when the pattern determining section (54) refers to the weather adapted map (56b), illuminance of the light distribution pattern (Lo, Hi, LHi, RHi, LoV, S, J1) is lower than when the pattern determining section (54) refers to the basic map (56a), and/or
the weather adapted map (56b) includes only the low beam light distribution pattern and the V-beam light distribution pattern,
wherein the V-beam light distribution pattern (LoV) is formed by superimposing the low beam light distribution pattern that is used in a left-hand traffic region with the low beam light distribution pattern that is used in a right-hand traffic region, and
wherein in the V-beam light distribution pattern (LoV) the light to be applied to the vicinity of the intersection of the vertical line V and the horizontal line H on the imaginary vertical screen is suppressed.

2. The control device (50) according to claim 1, wherein the weather adapted map (56b) is configured such that the number of light distribution patterns (Lo, Hi, LHi, RHi, LoV, S, J1, J2) selectable from the weather adapted map (56b) reduces when a speed of the vehicle is lower than a certain speed.

3. The control device (50) according to claim 1 or 2, further comprising a traveling location judging section (64) configured to judge whether the vehicle is traveling in an urban area,
wherein the plurality of maps further includes an urban adapted map (56c) adapted to be used in the urban area, and
the pattern determining section (54) refers to the basic map (56a) to determine the light distribution pattern (Lo, Hi, LHi, RHi, LoV, S, J1) when traveling location judging section (64) judges that the vehicle is not traveling in the urban area, and refers to the urban adapted map (56c) to determine the light distribution pattern (Lo, Hi, LHi, RHi, LoV, S, J1) when traveling location judging section (64) judges that the vehicle is traveling in the urban area.

4. The control device (50) according to claim 3, wherein the urban adapted map (56c) is configured such that, when the pattern determining section (54) refers to the urban adapted map (56c), the frequency of changing the light distribution pattern (Lo, Hi, LHi, RHi, LoV, S, J1) is lower than when the pattern determining section (54) refers to the basic map (56a).

5. The control device (50) according to claim 4, wherein the number of light distribution patterns (Lo, Hi, LHi, RHi, LoV, S, J1) selectable from the urban adapted map (56c) is less than the number of light distribution patterns (Lo, Hi, LHi, RHi, LoV, S, J1) selectable from the basic map (56a).

6. The control device (50) according to any one of claims 3 to 5, wherein the traveling location judging section (64) is configured to judge whether the vehicle is traveling on a motorway, and when the traveling location judging section (64) judges that the vehicle is traveling on the motorway, the pattern determining section (54) determines that a motorway high beam light distribution pattern (J2) is to be formed by the vehicle headlamp (210), wherein an upward beam diffusion amount of the motorway high beam light distribution pattern (J2) is smaller than the upward beam diffusion amount of a basic high beam light distribution pattern (J1).

7. A vehicle headlamp system (100) comprising:
an imaging device (30) configured to take an image of a region in front of the vehicle;
the control device (50) according to claim 1; and
a vehicle headlamp (210) adapted to be controlled by the control device (50), the vehicle headlamp (210) comprising:
a light source (14);
a shade mechanism (18) configured to form a plurality of light distribution patterns (Lo, Hi, LHi, RHi, LoV, S, J1, J2) by shielding light from the light source (14);
a shade actuator (28) configured to move the shade mechanism (18); and
a swivel actuator (222) configured to swivel a lamp unit (10) comprising the light source (14) and the shade mechanism (18),
wherein, upon receipt of the control signal from the control device (50), at least one of the light source (14), the shade actuator (28) and the swivel actuator (222) are controlled to form the light distribution pattern (Lo, Hi, LHi, RHi, LoV, S, J1, J2) determined by the pattern determining section (54),
wherein the image taken by the imaging device is sent to the vehicle detecting section (62) as the image data.

## Patentansprüche

1. Steuervorrichtung (50), umfassend:
einen Fahrzeugerkennungsabschnitt (62), der so konfiguriert ist, dass er Bilddaten empfängt, die durch Aufnahme eines Bildes eines Bereichs vor einem Fahrzeug erhalten werden, und dass er ein vorausfahrendes Fahrzeug und eine Position des vorausfahrenden Fahrzeugs auf der Grundlage der Bilddaten erkennt;
einen Kartenspeicherabschnitt (56);
einen Musterbestimmungsabschnitt (54), der so konfiguriert ist, dass er ein Lichtverteilungsmuster (Lo, Hi, LHi, RHi, LoV, S, J1, J2), das von einem Fahrzeugscheinwerfer (210) zu bilden ist, auf der Grundlage der Position des vorausfahrenden Fahrzeugs und unter Bezugnahme auf den Kartenspeicherabschnitt (56) bestimmt; und
einen Ausgabeabschnitt (58), der so konfiguriert ist, dass er ein Steuersignal an den Fahrzeugscheinwerfer (210) ausgibt, so dass das von dem Musterbestimmungsabschnitt (54) bestimmte Lichtverteilungsmuster (Lo, Hi, LHi, RHi, LoV, S, J1, J2) gebildet wird,
**dadurch gekennzeichnet, dass** die Steuervorrichtung (50) weiter einen Wetterbeurteilungsabschnitt (52) umfasst, der so konfiguriert ist, dass er auf der Grundlage von Informationen von einem Scheibenwischerschalter (102), einem Nebelscheinwerferschalter (104) oder einem Regentropfensensor (106) beurteilt, ob eine Umgebung, in der das Fahrzeug fährt, sich in einem Wetterzustand befindet, der einen Fehler beim Erkennen der Position des vorausfahrenden Fahrzeugs verursachen kann,
der Kartenspeicherabschnitt (56) so konfiguriert ist, dass er eine Vielzahl von Karten speichert, die zum Auswählen des Lichtverteilungsmusters (Lo, Hi, LHi, RHi, LoV, S, J1, J2) dienen, das durch den Fahrzeugscheinwerfer (210) auf der Grundlage der Position des vorausfahrenden Fahrzeugs zu bilden ist, wobei die Vielzahl von Karten eine Basiskarte (56a) und eine wetterangepasste Karte (56b) einschließt, wobei die wetterangepasste Karte (56b) angepasst ist, um in dem Wetterzustand verwendet zu werden, und
der Musterbestimmungsabschnitt (54) auf die Basiskarte (56a) Bezug nimmt, um das Lichtverteilungsmuster (Lo, Hi, LHi, RHi, LoV, S, J1) zu bestimmen, wenn der Wetterbeurteilungsabschnitt (52) beurteilt, dass sich die Umgebung nicht in dem Wetterzustand befindet, und auf die wetterangepasste Karte (56b) Bezug nimmt, um das Lichtverteilungsmuster (Lo, Hi, LHi, RHi, LoV, S, J1) zu bestimmen, wenn der Wetterbeurteilungsabschnitt (52) beurteilt, dass sich die Umgebung in dem Wetterzustand befindet,
wobei die wetterangepasste Karte (56b) konfiguriert ist, so dass:
wenn der Musterbestimmungsabschnitt (54) auf die wetterangepasste Karte (56b) Bezug nimmt, eine Grenzlinie des Lichtverteilungsmusters (Lo, Hi, LHi, RHi, LoV, S, J1) niedriger ist als wenn der Musterbestimmungsabschnitt (54) auf die Basiskarte (56a) Bezug nimmt, und/oder
wenn der Musterbestimmungsabschnitt (54) auf die wetterangepasste Karte (56b) Bezug nimmt, die Beleuchtungsstärke des Lichtverteilungsmusters (Lo, Hi, LHi, RHi, LoV, S, J1) niedriger ist als wenn der Musterbestimmungsabschnitt (54) auf die Basiskarte (56a) Bezug nimmt, und/oder
die wetterangepasste Karte (56b) nur das Abblendlichtlichtverteilungsmuster und das V-Strahl-Lichtverteilungsmuster einschließt,
wobei das V-Strahl-Lichtverteilungsmuster (LoV) durch Überlagerung des Abblendlichtlichtverteilungsmusters, das in einem Linksverkehrsbereich verwendet wird, mit dem Abblendlichtlichtverteilungsmuster, das in einem Rechtsverkehrsbereich verwendet wird, gebildet wird, und
wobei in dem V-Strahl-Lichtverteilungsmuster (LoV) das Licht, das in der Nähe des Schnittpunkts der vertikalen Linie V und der horizontalen Linie H auf dem imaginären vertikalen Schirm aufzubringen ist, unterdrückt wird.

2. Steuervorrichtung (50) nach Anspruch 1, wobei die wetterangepasste Karte (56b) konfiguriert ist, so dass die Anzahl der aus der wetterangepassten Karte (56b) auswählbaren Lichtverteilungsmuster (Lo, Hi, LHi, RHi, LoV, S, J1, J2) abnimmt, wenn eine Geschwindigkeit des Fahrzeugs unter einer bestimmten Geschwindigkeit liegt.

3. Steuervorrichtung (50) nach Anspruch 1 oder 2, weiter umfassend einen Fahrortbeurteilungsabschnitt (64), der so konfiguriert ist, dass er beurteilt, ob das Fahrzeug in einem Stadtgebiet fährt,
wobei die Vielzahl von Karten weiter eine stadtangepasste Karte (56c) einschließt, die angepasst ist, um in dem Stadtgebiet verwendet zu werden, und
der Musterbestimmungsabschnitt (54) auf die Basiskarte (56a) Bezug nimmt, um das Lichtverteilungsmuster (Lo, Hi, LHi, RHi, LoV, S, J1) zu bestimmen, wenn der Fahrortbeurteilungsabschnitt (64) beurteilt, dass das Fahrzeug nicht in dem Stadtgebiet fährt, und auf die stadtangepasste Karte (56c) Bezug nimmt, um das Lichtverteilungsmuster (Lo, Hi, LHi, RHi, LoV, S, J1) zu bestimmen, wenn der Fahrortbeurteilungsabschnitt (64) beurteilt, dass das Fahrzeug in dem Stadtgebiet fährt.

4. Steuervorrichtung (50) nach Anspruch 3, wobei die stadtangepasste Karte (56c) konfiguriert ist, so dass, wenn der Musterbestimmungsabschnitt (54) auf die stadtangepasste Karte (56c) Bezug nimmt, die Häufigkeit der Änderung des Lichtverteilungsmusters (Lo, Hi, LHi, RHi, LoV, S, J1) geringer ist, als wenn der Musterbestimmungsabschnitt (54) auf die Basiskarte (56a) Bezug nimmt.

5. Steuervorrichtung (50) nach Anspruch 4, wobei die Anzahl der Lichtverteilungsmuster (Lo, Hi, LHi, RHi, LoV, S, J1), die aus der stadtangepassten Karte (56c) auswählbar sind, geringer ist als die Anzahl der Lichtverteilungsmuster (Lo, Hi, LHi, RHi, LoV, S, J1), die aus der Basiskarte (56a) auswählbar sind.

6. Steuervorrichtung (50) nach einem der Ansprüche 3 bis 5,
wobei der Fahrortbeurteilungsabschnitt (64) so konfiguriert ist, dass er beurteilt, ob das Fahrzeug auf einer Autobahn fährt, und wenn der Fahrortbeurteilungsabschnitt (64) beurteilt, dass das Fahrzeug auf der Autobahn fährt, der Musterbestimmungsabschnitt (54) bestimmt, dass ein Autobahn-Fernlichtverteilungsmuster (J2) durch den Fahrzeugscheinwerfer (210) gebildet werden soll,
wobei eine nach oben gerichtete Strahlstreuungsmenge des Autobahn-Fernlichtverteilungsmusters (J2) kleiner ist als die nach oben gerichtete Strahlstreuungsmenge eines Basis-Fernlichtverteilungsmusters (J1).

7. Fahrzeugscheinwerfersystem (100), umfassend:
eine Bildgebungsvorrichtung (30), die so konfiguriert ist, dass sie ein Bild von einem Bereich vor dem Fahrzeug aufnimmt;
die Steuervorrichtung (50) nach Anspruch 1; und
einen Fahrzeugscheinwerfer (210), der angepasst ist, um durch die Steuervorrichtung (50) gesteuert zu werden, wobei der Fahrzeugscheinwerfer (210) umfasst:
eine Lichtquelle (14);
einen Abschattungsmechanismus (18), der so konfiguriert ist, dass er eine Vielzahl von Lichtverteilungsmustern (Lo, Hi, LHi, RHi, LoV, S, J1, J2) durch Abschirmung von Licht von der Lichtquelle (14) bildet;
einen Abschattungsaktuator (28), der so konfiguriert ist, dass er den Abschattungsmechanismus (18) bewegt; und
einen Schwenkaktuator (222), der so konfiguriert ist, dass er eine die Lichtquelle (14) und den Abschattungsmechanismus (18) umfassende Lampeneinheit (10) schwenkt,
wobei bei Empfang des Steuersignals von der Steuervorrichtung (50) mindestens eines von der Lichtquelle (14), dem Abschattungsaktuator (28) und dem Schwenkaktuator (222) gesteuert wird, um das von dem Musterbestimmungsabschnitt (54) bestimmte Lichtverteilungsmuster (Lo, Hi, LHi, RHi, LoV, S, J1, J2) zu bilden,
wobei das von der Bildgebungsvorrichtung aufgenommene Bild als die Bilddaten an den Fahrzeugerkennungsabschnitt (62) gesendet wird.

## Revendications

1. Dispositif de commande (50) comprenant :
une section (62) de détection de véhicule configurée pour recevoir des données d'image obtenues en prenant une image d'une région devant un véhicule, et pour détecter un véhicule situé devant et une position du véhicule situé devant en fonction des données d'image ;
une section (56) de stockage de cartes ;
une section (54) de détermination de motif configurée pour déterminer un motif de distribution de lumière (Lo, Hi, LHi, RHi, LoV, S, J1, J2) devant être formé par un phare de véhicule (210) en fonction de la position du véhicule situé devant et en référence à la section (56) de stockage de cartes ; et
une section de sortie (58) configurée pour délivrer en sortie un signal de commande au phare de véhicule (210) de telle sorte que le motif de distribution de lumière (Lo, Hi, LHi, RHi, LoV, S, J1, J2) déterminé par la section (54) de détermination de motif soit formé,
**caractérisé en ce que** le dispositif de commande (50) comprend en outre une section (52) d'estimation météorologique configurée pour estimer si un environnement dans lequel le véhicule se déplace est dans une condition météorologique qui peut provoquer une erreur de détection de la position du véhicule situé devant sur la base d'informations provenant d'un commutateur d'essuie-glace (102), d'un commutateur de phare antibrouillard (104) ou d'un capteur de pluie (106),
la section (56) de stockage de cartes est configurée pour stocker une pluralité de cartes qui sont destinées à sélectionner le motif de distribution de lumière (Lo, Hi, LHi, RHi, LoV, S, J1, J2) devant être formé par le phare de véhicule (210) en fonction de la position du véhicule situé devant, dans lequel la pluralité de cartes inclut une carte de base (56a) et une carte (56b) adaptée aux conditions météorologiques, la carte (56b) adaptée aux conditions météorologiques étant conçue pour être utilisée dans ladite condition météorologique, et
la section (54) de détermination de motif se réfère à la carte de base (56a) pour déterminer le motif de distribution de lumière (Lo, Hi, LHi, RHi, LoV, S, J1) lorsque la section (52) d'estimation météorologique estime que l'environnement n'est pas dans ladite condition météorologique, et se réfère à la carte (56b) adaptée aux conditions météorologiques pour déterminer le motif de distribution de lumière (Lo, Hi, LHi, RHi, LoV, S, J1) lorsque la section (52) d'estimation météorologique estime que l'environnement est dans ladite condition météorologique,
dans lequel la carte (56b) adaptée aux conditions météorologiques étant configurée de telle sorte que :
lorsque la section (54) de détermination de motif se réfère à la carte (56b) adaptée aux conditions météorologiques, une ligne de coupure du motif de distribution de lumière (Lo, Hi, LHi, RHi, LoV, S, J1) est plus basse que lorsque la section (54) de détermination de motif se réfère à la carte de base (56a), et/ou
lorsque la section (54) de détermination de motif se réfère à la carte (56b) adaptée aux conditions météorologiques, l'éclairement du motif de distribution de lumière (Lo, Hi, LHi, RHi, LoV, S, J1) est plus bas que lorsque la section (54) de détermination de motif se réfère à la carte de base (56a), et/ou
la carte (56b) adaptée aux conditions météorologiques inclut uniquement le motif de distribution de lumière de faisceau de croisement et le motif de distribution de lumière de faisceau en V,
dans lequel le motif de distribution de lumière de faisceau en V (LoV) est formé par superposition du motif de distribution de lumière de faisceau de croisement qui est utilisé dans une région de trafic à gauche avec le motif de distribution de lumière de faisceau de croisement qui est utilisé dans une région de trafic à droite, et,
dans lequel dans le motif de distribution de lumière de faisceau en V (LoV), la lumière à appliquer au voisinage de l'intersection de la ligne verticale V et de la ligne horizontale H sur l'écran vertical imaginaire est supprimée.

2. Dispositif de commande (50) selon la revendication 1, dans lequel la carte (56b) adaptée aux conditions météorologiques est configurée de telle sorte que le nombre de motifs de distribution de lumière (Lo, Hi, LHi, RHi, LoV, S, J1, J2) pouvant être sélectionnés à partir de la carte (56b) adaptée aux conditions météorologiques diminue lorsqu'une vitesse du véhicule est inférieure à une certaine vitesse.

3. Dispositif de commande (50) selon la revendication 1 ou revendication 2, comprenant en outre une section d'estimation d'emplacement de déplacement (64) configurée pour estimer si le véhicule se déplace dans une zone urbaine,
dans lequel la pluralité de cartes inclut en outre une carte adaptée aux zones urbaines (56c) conçue pour être utilisée dans la zone urbaine, et
la section (54) de détermination de motif se réfère à la carte de base (56a) pour déterminer le motif de distribution de lumière (Lo, Hi, LHi, RHi, LoV, S, J1) lorsque la section d'estimation d'emplacement de déplacement (64) estime que le véhicule ne se déplace pas dans la zone urbaine, et se réfère à la carte adaptée aux zones urbaines (56c) pour déterminer le motif de distribution de lumière (Lo, Hi, LHi, RHi, LoV, S, J1) lorsque la section d'estimation d'emplacement de déplacement (64) estime que le véhicule se déplace dans la zone urbaine.

4. Dispositif de commande (50) selon la revendication 3, dans lequel la carte adaptée aux zones urbaines (56c) est configurée de telle sorte que, lorsque la section (54) de détermination de motif se réfère à la carte adaptée aux zones urbaines (56c), la fréquence de changement du motif de distribution de lumière (Lo, Hi, LHi, RHi, LoV, S, J1) est inférieure à celle lorsque la section (54) de détermination de motif se réfère à la carte de base (56a).

5. Dispositif de commande (50) selon la revendication 4, dans lequel le nombre de motifs de distribution de lumière (Lo, Hi, LHi, RHi, LoV, S, J1) pouvant être sélectionnés à partir de la carte adaptée aux zones urbaines (56c) est inférieur au nombre de motifs de distribution de lumière (Lo, Hi, LHi, RHi, LoV, S, J1) pouvant être sélectionnés à partir de la carte de base (56a).

6. Dispositif de commande (50) selon l'une quelconque des revendications 3 à 5, dans lequel la section d'estimation d'emplacement de déplacement (64) est configurée pour estimer si le véhicule se déplace sur une autoroute, et lorsque la section d'estimation d'emplacement de déplacement (64) estime que le véhicule se déplace sur l'autoroute, la section (54) de détermination de motif détermine qu'un motif de distribution de lumière de faisceau de route autoroutier (J2) doit être formé par le phare de véhicule (210), dans lequel une quantité de diffusion de faisceau vers le haut du motif de distribution de lumière de faisceau de route autoroutier (J2) est inférieure à la quantité de diffusion de faisceau vers le haut d'un motif de distribution de faisceau de route de base (J1).

7. Système de phare de véhicule (100) comprenant :
un dispositif d'imagerie (30) configuré pour prendre une image d'une région devant le véhicule ;
le dispositif de commande (50) selon la revendication 1 ; et
un phare de véhicule (210) conçu pour être commandé par le dispositif de commande (50), le phare de véhicule (210) comprenant :
une source de lumière (14) ;
un mécanisme (18) de masquage de lumière, configuré pour former une pluralité de motifs de distribution de lumière (Lo, Hi, LHi, RHi, LoV, S, J1, J2) par masquage de la lumière provenant de la source de lumière (14) ;
un actionneur (28) de mécanisme de masquage configuré pour déplacer le mécanisme (18) de masquage de lumière ; et
un actionneur pivotant (222) configuré pour faire pivoter une unité de lampe (10) comprenant la source de lumière (14) et le mécanisme (18) de masquage de lumière,
dans lequel, lors de la réception du signal de commande en provenance du dispositif de commande (50), au moins l'un parmi la source de lumière (14), l'actionneur (28) de mécanisme de masquage et l'actionneur pivotant (222) sont commandés pour former le motif de distribution de lumière (Lo, Hi, LHi, RHi, LoV, S, J1, J2) déterminé par la section (54) de détermination de motif,
dans lequel l'image prise par le dispositif d'imagerie est envoyée à la section (62) de détection de véhicule en tant que données d'image.
